Europäisches Patentamt

European Patent Office

Office européen des brevets

(19)

(11) **EP 0 418 499 B1**

(12) **EUROPEAN PATENT SPECIFICATION**

(45) Date of publication and mention
of the grant of the patent:
**18.12.1996 Bulletin 1996/51**

(51) Int Cl.6: **G06F 17/00**, G01R 23/00

(21) Application number: **90113953.5**

(22) Date of filing: **20.07.1990**

(54) **Time interval triggering and hardware histogram generation**

Zeitintervall-Triggerung und Hardware Erzeugung von Histogramm

Déclenchement d'intervalle de temps et génération par matériel d'histogramme

(84) Designated Contracting States:
**DE FR GB**

(30) Priority: **19.09.1989 US 409183**

(43) Date of publication of application:
**27.03.1991 Bulletin 1991/13**

(73) Proprietor: **Hewlett-Packard Company**
**Palo Alto, California 94304 (US)**

(72) Inventors:
• **Ho, Leland Murray**
**Sunnyvale, CA 94086 (US)**
• **Stephenson, Paul S.**
**Pleasanton, CA 94566 (US)**

• **Schmitz, John S.**
**Sunnyvale, CA 94087 (US)**

(74) Representative: **Liesegang, Roland, Dr.-Ing. et al**
**FORRESTER & BOEHMERT**
**Franz-Joseph-Strasse 38**
**80801 München (DE)**

(56) References cited:
**DE-A- 2 920 734**

• **Proceedings of the International Conference on**
**Computer Vision and Pattern Recognition June**
**1988, Ann Arbor, Michigan pages 945 - 950; M.**
**Abdelguerfi et al: "Parallel Bit-level Pipelined**
**VLSI Processing Unit for the Histogramming**
**Operation"**

## Description

Field of the Invention

The invention relates to an apparatus for processing measurement data. In particular, the invention relates to a pipelined time interval processing circuit to provide triggering on selected time interval conditions and to provide rapid histogramming of the measurement data.

Background of the Invention

Continuous time interval measurements on a signal provide a way to analyze characteristics of the signal in the modulation domain, i.e., the behavior of the frequency or phase of the signal versus time. This is different than classic ways of measuring and displaying data about signals. An oscilloscope shows amplitude versus time: the time domain. A spectrum analyzer shows amplitude versus frequency: the frequency domain.

Continuous time interval measurements make it simpler to study dynamic frequency behavior of a signal: frequency drift over time of an oscillator, the frequency hopping performance of an agile transmitter, chirp linearity and phase switching in radar systems.

A histogram is a picture of the distribution of measurement results as a function of a selected variable. For time interval results, for example, a histogram might display the distribution of a set of measurements over a range of time durations.

Generally, compiling data into a histogram using software processing is very slow because there is so much processing time between blocks of measurements. For example, in the Hewlett-Packard 5371A Time Interval Analyzer data is acquired, processed and added to a growing histogram one block at a time in blocks of up to 1000 measurements. There is about 6 seconds for every 1000 measurement block. At this rate, it would take about 69 days to accumulate 1 billion measurements.

In Hewlett-Packard Journal, Vol. 40, No. 1, February 1989, pages 35 to 41, "Frequency and Time Interval Analyzer Measurement Hardware" a pipelined time interval data processing circuit is described which includes a time stamp processor means for subtracting two successive time stamps, from signal measurement events, to produce a time interval result representing the time interval between the successive events.

Another parallel bit-level pipelined processing unit using the odd-even network topology is described in "Proceeding of the International Conference on Computer Vision and Pattern Recognition, June 1988, Ann Arbor, Michigan, US, pages 945 to 950. The proposed unit is composed of a number of identical bit-serial processing elements operating in parallel.

Compiling the histogram using hardware greatly improves the rate at which data can be histogrammed.

With the histogram circuit of the invention, data can be collected at a rate of at least 10 MHz. At this rate, it would take only 100 seconds to acquire 1 billion measurements. This is 60,000 times faster than the histogram rate of the software method.

When histogramming, the stored bin data must be incremented each time a new measurement occurs. For non-incrementing RAMs, this requires that the stored data be read, incremented and then written back into the RAM. Using a standard single port RAM, this requires that two memory cycles plus an increment calculation be performed in the time between data acquisitions. This severely limits the speed at which histogramming can be performed.

Event triggering is used to capture the data for a particular event of interest. A circuit is programmed to produce a trigger signal on the occurrence of some aspect of the input waveform that is characteristic of the event to be captured. In response to the trigger signal, a memory controller stops the flow of data into memory, so the memory holds the last iteration of data written into memory, which is the data from the event of interest. Depending on the delay from the trigger signal to the stop writing command, data prior to, subsequent to, or surrounding the trigger event will be captured.

There are a variety of conventional triggering modes, based on the amplitude or the slope of the input waveform. For example, by using maximum and minimum limit values (hysteresis bands), the trigger can be set to occur when the input signal crosses a threshold voltage in a positive direction, a negative direction, or either direction.

A piplined time interval data processing circuit according to the present invention is defined in claim 1.

The time interval data processing circuit of the invention uses a pipelined hardware data processor to perform the conversion of incoming time stamp data into time interval results. These results can be further processed into a hardware accumulated histogram or can be compared against limits to determine if a time interval trigger condition has occurred. By pipelining the processing of time stamp data, these operations can be performed while maintaining a fast rate of data acquisition.

In the first stage of the pipeline, the processing circuit subtracts the two time stamps from the current and the previous event to determine the time interval between events being measured. The second stage checks measurement result against minimum and maximum limits and determines which bin the measurement belongs in. The limit testing determines if the measurement fits the histogram limits and also yields the data required to perform measurement triggering on time intervals. The third stage of the pipeline increments the appropriate histogram bin in RAM. The first and third stages of the pipeline are themselves pipelined in substages.

The time interval trigger capability allows a time interval measurement to be terminated by a specified measurement result rather than by the measurement count. This is a powerful feature because it allows measurements to be made around key events of interest. Triggering on time interval results is made possible by real-time hardware processing of the time stamp data. The results of the comparisons with maximum and minimum limit values set by the user are can determine whether the measurement should be terminated.

To facilitate pipelining in storing the histogram results, the time interval data processing circuit uses dual port RAMs to achieve a fast data accumulation rate. When histogramming, the stored bin data must be incremented each time a new measurement occurs. The third pipeline stage read, increment, write operation is pipelined in substages by adding a latch in the data incrementing loop for the Dual Port RAM. During the first substage, data is read out of the RAM through a dedicated read port and is latched externally. During the second substage of the pipeline, the latched data is incremented and written back into the second port of Dual Port RAM. The latch also provides a way of avoiding access conflicts when the same bin is incremented repeatedly.

Additionally, an offset can be subtracted from the time interval result prior to histogramming or limit testing, to compensate for any channel skew that may exist between the two time stamps.

Description of the Drawings

Figure 1 shows a schematic block diagram of a pipelined time interval data processing circuit constructed according to the teachings of the invention.

Figure 2 shows a more detailed schematic block diagram of the time stamp processor 101 of Figure 1.

Figure 3 shows a more detailed schematic block diagram of the RAM storage 117 of Figure 1.

Detailed Description of the Invention

The time interval data processing circuit takes measurement data coming from the counting hardware, processes it, and compresses it into a histogram. By performing these actions in hardware, measurement data can be collected in real-time from the counting hardware. This allows a large number of measurements to be histogrammed in a very short amount of time.

The measurement data processing through the processing circuit is pipelined in order to improve its speed and efficiency. This means that the task of histogramming is divided into smaller tasks that can be executed in separate stages. Each stage can perform a task on a different measurement value at the same time. In this way, the histogram processor increases its efficiency by performing more than one task simultaneously.

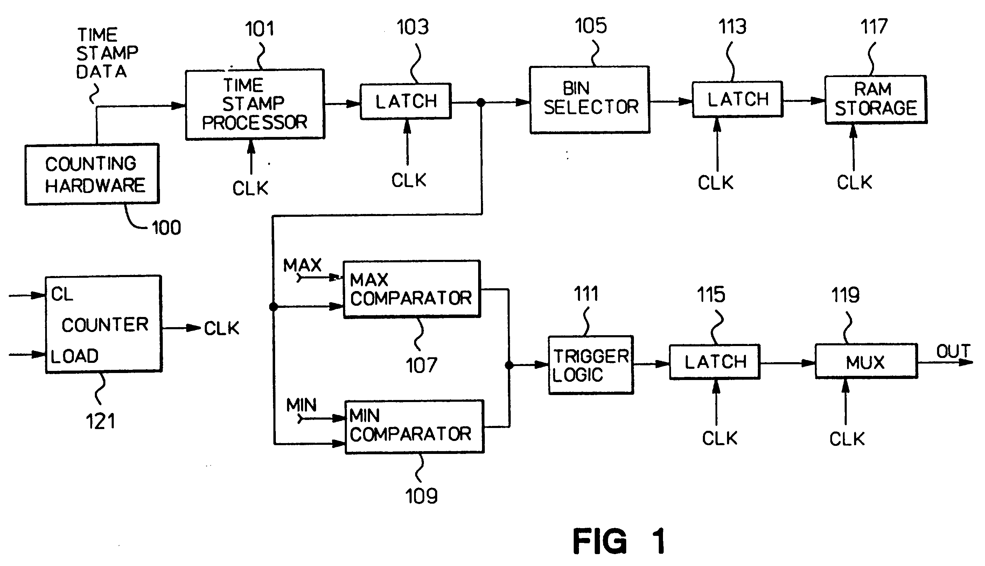

Figure 1 shows a schematic block diagram of a pipelined time interval data processing circuit constructed according to the teachings of the invention. The first stage of the pipeline is a time stamp processor 101 that receives a stream of time stamp data from counting hardware (100) and subtracts two consecutive time stamps to compute the time interval between the two represented events. The resulting time interval data is latched by latch 103, and used both for histogram input and triggering.

Time interval measurement data arrives at the processing circuit as a series of time stamps that mark the time at which events occurred. Time stamp processor 101 calculates the time interval between two events by subtracting the time at which events occurred, i.e., by subtracting their corresponding time stamps. An example of an instrument that generates this type of time stamp and continuous time interval data is described in "Frequency and Time Interval Analyzer Measurement Hardware", Paul S. Stephenson, Hewlett-Packard Journal, Vol. 40, No. 1, February, 1989.

The time interval data is applied to bin selector 105, to comparator 107, and to comparator 109, which along with trigger logic 111 comprise the second stage of the pipeline. Latches 113 and 115 separate the outputs of bin selector 105 and trigger logic 111 from the third pipeline stage.

Bin selector 105 extracts the bin number from the time interval data, as described in detail below. The bin selector 105 can only be set up to acquire histograms with certain quantized bin sizes. This is because the bin number that a measurement falls into is determined by directly extracting a bit field from the time interval data. This means that the bin size can only be powers of two multiples of the time interval represented by the least significant bit, which is a function of the frequency of the time base used for the counters and the interpolator.

Comparator 107 compares the time interval data to a present upper limit value. Similarly, comparator 109 compares the time interval data to a preset lower limit value.

For histogram operation, the limits are set to determine if the time interval data falls within the valid histogram range. If the time interval data is within the limits, the trigger logic 111 output is valid and the bin of the histogram in RAM storage 117 indicated by the bin selector 105 is incremented by one. If not, an overflow or an underflow counter, not shown, is incremented. Limit testing is performed to insure that measurements are uniquely mapped into the histogram bins. The values that the limits are set to determine the offset of the histogram window.

For time interval triggering operation, the limits are set to determine whether a time interval trigger condition has been met. If so, then the trigger logic 111 output is valid and a signal is sent to halt the measurement.

The function performed by the histogram limit testing yields the data required to perform measurement triggering on time intervals. The trigger logic 111 is a logic network that produces output signals as a function of the output from comparators 107 and 109. Multiplexer 119 selects the trigger output from eight possible signals: MAXGT (greater than the max limit), MAXEQ (equal to the max limit), MAXLT (less than the max limit), MINGT (greater than the min limit), MINLT (less than the min limit), INRANGE (between or equal to the min and max limits), OUTRANGE (greater than the max limit or less than the min limit) and ISF TRIGGER (interval sampling frequency). The first five of these signals are obtained directly from the magnitude comparators. The ISF TRIGGER signals specify with two bits whether the time interval data is equal to the max limit, equal to the min limit, between the min and max or out of range.

For histogram operation, the INRANGE trigger signal is used as a valid data tag to determine whether data should be added to the histogram or not.

The third pipeline stage is RAM storage 117. Ram storage 117 reads the current count of histogram bin selected by bin selector 105 and latched in latch 113, and increments the bin count and writes it back.

A dual port RAM is used to hold the histogram bin counts because it allows the read/increment/write cycle of the histogram circuit to be pipelined. By pipelining, only one memory access is performed per clock cycle. This provides a great speed advantage over regular single port RAMs that would require two accesses per cycle. On each clock cycle one bin location is read via the first port RAM, while another bin location is written to via the second port.

Special handling is required if both ports are accessing the same bin location. This happens when two measurements in a row have fallen into the same bin. In this case, the incremented value that is to be written back into the ram is latched back into the incrementer latch instead of the value that is being read from the RAM. This value is then incremented a second time on the next clock cycle. This operation is described in more detail later.

The stages and substages in the pipeline are clocked by clock pulses from a free running, loadable counter 121. It is important to synchronize the pipeline clock with the arrival of event data. The counter 121 receives a clock input from a high frequency master clock, and produces a clock output pulse (CLK) periodically if no measurement event occurs. If a measurement event occurs, the counter is reset with an appropriate input at its load port from the event counter circuits (not shown), so the clock output is synchronized with the arrival of the event data at the time stamp processor 101. In a particular embodiment, where measurement events can occur as often as every 64 nS, the counter produces clock pulses every 56 nS, unless reloaded. This clock operation ensures that the data in the pipeline will be stored in the histogram RAM storage, and the trigger logic 111 will output a triggering signal, even if events cease.

Specific Embodiment

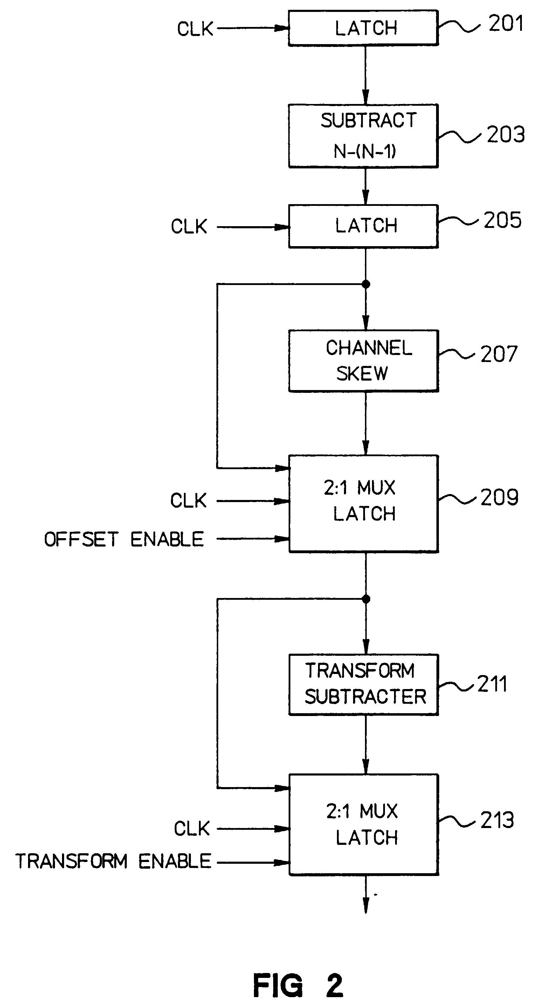

Figure 2 shows a more detailed schematic block diagram of the time stamp processor 101 of Figure 1. The time stamp processor 201 has three pipelined substages of processing. The first substage 203 subtracts two time stamps to obtain a time interval result. The second substage 207 subtracts an offset from the time interval result to correct for channel skew. The third substage 211 transforms this time interval result from a 2 nS binary and 200 pS BCD number to one 200 pS binary number. The substages are separated by latches 201, 205, 209, and 213. Latches 209 and 213 also contain 2:1 multiplex input ports, and serve to enable or bypass the functions of the second or third substages.

Although the processing circuit of the invention could implemented in a variety of ways, the inventors have found that a particularly suitable implementation is a 1.5 micron gate length CMOS gate array, and fast CMOS static dual port RAMs.

Binary time stamp input data is latched in latch 201. The binary data can include digits from counters and from interpolator circuits, which increase the accuracy of the measurements.

In one specific embodiment, that will be described to illustrate the operation of the time stamp processor, each time stamp is 36 bits long. The upper 32 bits of the time stamp represent the time at which an event occurred according to the time counters, which keep track of the number of 2 nS clock periods that have occurred since the previous event. The lower 4 bits of the time stamp are from an interpolator, and represent the number of 200 pS periods that occurred between the event and the next edge of the 500 MHz time base. It will be understood that a wide variety of digital data types could be used to implement the teachings of the invention.

In the first substage of the time stamp processor pipeline, the time stamp subtracter 203 subtracts the two time stamps contained in the inputs TIME STAMP N-1 and TIME STAMP N, received from the counters and interpolators.

For interpolator operation, each time stamp is made up of two parts. The upper 32 bits are a binary value that represents the stage of the time ZDTs when an event occurs. The time counters (not shown) that provide the time stamp data are incremented every 2 nS by a 500 MHz clock. The lower 4 bits of the time stamp data are a Binary Coded Decimal (BCD) value that is generated by the interpolators (not shown). The interpolators increase the time resolution of the measurement by determining the number of 200 pS periods that elapse between the event and the next cycle of the 500 MHz clock. The interpolators effectively break up each 2 nS cycle of the clock into ten 200 pS cycles.

The time interval between two events is determined by subtracting the time stamps associated with each event. The time stamp processor 101 always subtracts the counter value ($ZDT_{N-1}$) in TIME STAMP N-1 from the counter value ($ZDT_N$) in TIME STAMP N, but it subtracts the interpolator value ($IT_N$) from TIME STAMP N from the value in TIME STAMP N-1 ($IT_{N-1}$). This is because the interpolator values are subtracted from the counter values, and therefore cannot be appended directly to the counter value result. The time interval between events is calculated as follows:

$$\text{Time Interval} = (ZDT_N - IT_N) - (ZDT_{N-1} - IT_{N-1})$$

$$\text{Time Interval} = (ZDT_N - ZDT_{N-1}) + (IT_{N-1} - IT_N)$$

The 36 bit time stamp subtracter 203 can be implemented with standard four bit adder blocks, carry look ahead blocks, and a special four bit subtracter block to handle the interpolator result. The interpolator subtracter block can be selected to perform either a binary or a BCD subtraction. This allows the interpolators to be either BCD or binary interpolators. The polarity of the interpolator subtracter block can also be reversed to permit direct histogramming of 36 bits.

The time stamp values are subtracted with adders by adding the minuend (contents of TIME STAMP N) to the 2's complement of the subtrahend (contents of TIME STAMP N-1). This is accomplished by connecting the inverted outputs of TIME STAMP N-1 to the adders and adding one by asserting the carry-in input to the adder chain.

In the second substage of the time stamp processor pipeline, the channel skew subtracter 207 subtracts an offset value from the time interval values calculated by subtracter 203. This computation may be required to compensate for the skew between start and stop latch signals. The effects of this skew must be factored out of the time interval results before they are histogrammed. This calculated cannot be made after histogramming is completed if the measurement data received by the processing circuit is compressed into a set of bin values. It would be impossible at the point to determine how many measurements in any given bin are in the wrong bin due to the effects of skew.

When the OFFSET_ENABLE bit is set at latch 209, the channel skew subtracter is enabled. Latch 209 selects and latches the output of channel skew subtracter 207. If OFFSET_ENABLE is not set, latch 209 selects and latches the output of latch 205, bypassing the channel skew subtracter 207.

In the third substage of the time stamp processor pipeline, the transform processor 211 transforms the time interval data from the form of a 32 bit binary 2 nS count and 4 bit BCD 200 pS count to a 36 bit binary 200 pS count. The transformation converts counter and interpolator values into one binary value that allows histogramming on the full data word, using all bins in the histogram RAM.

The transform processor 211 performs the transformation by multiplying the 32 bit ZDT value by 10 (to convert it to 200 pS counts) and adding the BCD interpolator value. The multiplication by 10 can be accomplished by adding the value of the ZDT bits shifted by 3 bits (to multiply it by 8) and the value of the ZDT bits shifted by 1 bit (to multiply it by 2).

Although there are two additions described (8*ZDT + 2*ZDT + Interpolator), this transformation can be performed in one stage by one special adder. The 32 bit ZDT value shifted to the left by 3 bits (8*ZDT) concatenated with the three lower bits of the BCD number is added to the ZDT value shift to the left 1 bit (2*ZDT). This takes care of all the bits except the most significant bit of the interpolator value. It is factored into the addition in the carry-in to bit 3. If the carry-out from bit 3 or the MSB of the BCD number is set, then a carry-in is generated into bit 3 of the adder. This works because whenever the MSB of the BCD number is set, a carry-out of bit 3 never occurs, and whenever a carry is generated out of bit 3, the MSB of the BCD number is 0.

When the TRANSFORM_ENABLE bit is set at latch 209, the channel skew subtracter is enabled. Latch 209 selects and latches the output of channel skew subtracter 207. If TRANSFORM_ENABLE is not set, latch 209 selects and latches the output of latch 205, bypassing the channel skew subtracter 207. Latch 213 corresponds to latch 103 on Figure 1, which holds the output of the time stamp processor 101 for input to bin selector 105.

The bin selector 105 can only be setup to acquire histograms with certain quantized bin sizes. This is because the bin number that a measurement falls into is determined by directly extracting a 13 bit field from the 36 bit measurement result. This means that the bin size can only be powers of two multiples of 200 pS if the transform processor 203 was enabled, or powers of two multiples of 2 nS if the transform processor 211 was not enabled.

In the presently described specific embodiment, the bin number value is extracted from the time interval value by multiplexers that select the number of bits that the RAM storage 117 can hold. For example, for 8K RAM locations, 13 24:1 multiplexers are used to select the 24 13 bit fields possible from a 36 bit measurement value.

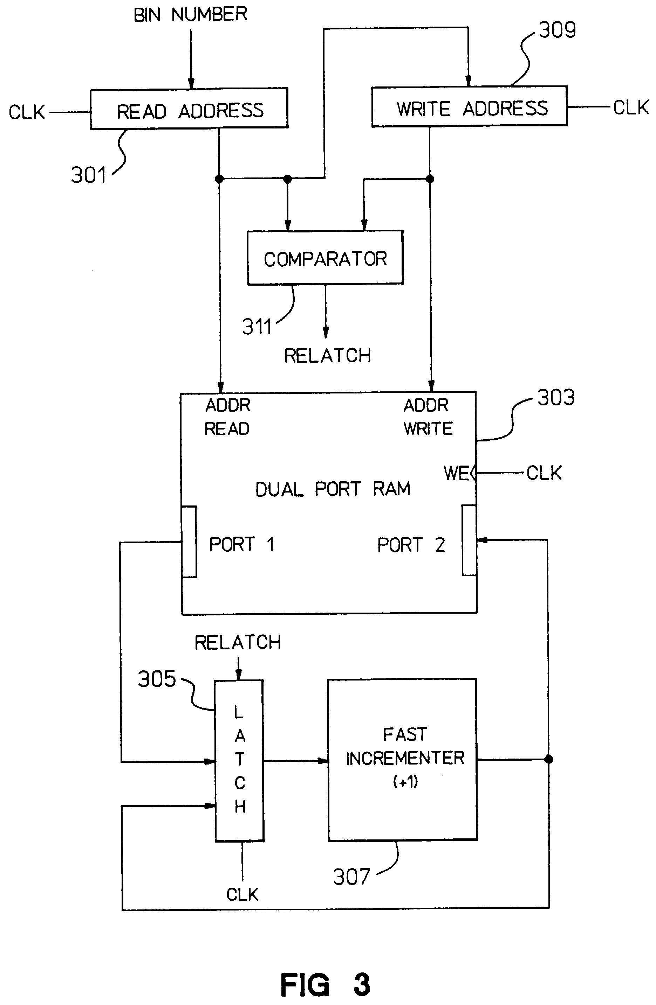

Figure 3 shows a more detailed schematic block diagram of the RAM storage 117 of Figure 1. A dual port RAM 303 stores the histogram bin counts because this type of RAM allows the read, increment, write cycle of the histogram storage circuit to be pipelined. In the first substage of the storage pipeline, a bin value is read out of the selected bin in RAM 303. In the second substage, incrementer 305 increments the bin value and the incremented value is written back into the RAM 303. By pipelining, effectively only one memory access is performed per clock cycle. This provides a great speed advantage over regular single port RAMs that would require two accesses per cycle.

The bin number input is latched in read address latch 301, which corresponds to latch 113 in Figure 3. The output of latch 301 is applied to the read address port of RAM 303. The bin number is used as the address for reading RAM 303, with the value from that bin address output from port 1 of RAM 303 and latched in incrementer latch 305. Incrementer 307 adds 1 to the bin value stored in incrementer latch 305.

The output of latch 301 is also applied to write address latch 309, so the write address latch will always hold the bin address that immediately preceded the bin address currently in read address latch 301. The output of latch 309 is applied to the write address port of RAM 303. Thus the preceding bin number is used as the address for writing back to RAM 303. The data to be written back comes from the incrementer circuit 307.

Special handling is required if both ports of RAM 303 are accessing the same location. When this happens, it means that two measurements in a row have fallen into the same bin.

Access conflicts to the dual port RAM 303 are detected by the bin address comparator 311. Comparator 311 is an equality comparator that compares the outputs from latches 301 and 309, i.e., the addresses going to the read and write ports of the RAM 303.

Access conflicts are determined by comparator 311, which receives the bin numbers from latches 301 and 309, compares them, and produces a relatch output which controls the operation of 2:1 latch 305. Latch 305 comprises a 2:1 multiplexer, with output controlled by the relatch signal, followed by a flip-flop. If two sequential bin numbers are equal, the read and write addresses are equal, the relatch output of comparator 311 becomes valid, and the incremented value from incrementer 307 is latched back into the incrementer latch 305, instead of the value that is being read from port 1 of the RAM 303. This value is then incremented a second time on the next clock cycle.

When an access conflict occurs with valid data in both the first and second storage pipeline substage, neither the read nor the write to the RAM needs to be successfully accomplished, but the specified bin data just needs to be incremented twice in a row. What is required is that the RAM be ready to access an arbitrary location on the next clock cycle. The correct data is written back into the RAM on the next non-conflict access cycle. Slave dual port RAMs, which have no arbitration control, are used to satisfy these requirements. RAM devices such as the Integrated Device Technology IDT 7142 slave dual port RAMs are suitable for this application.

Normally, a bank of dual port RAMs consists of one master part which contains arbitration logic that determines which port receives control during an access conflict. This master part then tells other slave parts, which have no arbitration logic, about its decision. In this way, the whole memory bank acts in unison. However, for the specific embodiment described, only slave parts can be used. Master parts would prevent arbitrary access to both ports on the cycle following an access conflict. This would cause data to be missed in a real-time data acquisition system.

Frequency Triggering

By using two of the processor circuits in parallel, it is possible to trigger on the occurrence of a selected frequency in the signal being measured. One processor receives time stamp data from measurement events, as described above. The second processor circuit receives event stamp data from the counter circuits, processing them in a similar manner to produce a count of the number of events that occurred between the start and stop events. The results are the time for a measurement and the number of events during that time, from which the frequency can be calculated.

However, for real time triggering, the frequency calculation may be slow, or require expensive hardware. Alternatively, the measurement can be made with interval sampling, arming so the stop event is the next event after a preset time period. Knowing the approximate measurement time and the frequency, the expected count can be determined, plus or minus one count quantization error. The maximum and minimum limits for the comparators 107 and 109 in the event stamp processor circuit can be set to the expected event count plus or minus 1, respectively. The trigger output is an indication that the measured signal is at the selected trigger frequency. The ISF TRIGGER signal described above can provide a suitable trigger. This result can be checked by comparing the time interval data from the time stamp processor circuit with a look up table programmed with counts and corresponding times.

**Claims**

1. A pipelined time interval data processing circuit for converting time stamp data from signal measurement events into time interval results and processing the results into a hardware accumulated histogram, comprising:

counting means (100 for measuring time stamp data for an electrical signal, corresponding to a plurality of signal measuring events, the time stamp data marking the times at which the events occurred;
time stamp processor means (101) for receiving the time stamp data, subtracting two successive time stamps to produce a time interval result representing the time interval between the successive events and providing a time interval output signal;
comparator means (107,109), responsive to the time interval result output signal from the time stamp processor means (101), for comparing the time interval result against minimum and maximum limits to determine whether the time interval result is valid histogram data and providing a valid data output signal when the time interval result is valid histogram data; bin selector means (105) responsive to the time interval result output signal from the time stamp processor means for determining and identifying which histogram bin the time interval result belongs in, and providing a bin number output signal; and means (117) for storing counts, each count representative of the number of occurrences in which said time interval result is identified with its histogram bin; said means (117) being responsive to the bin number output signal and to the valid data output signal, for storing the counts for the histogram bins, and for incrementing the count of the histogram bin corresponding to the bin number output signal for a time interval result, if the comparator means provides the valid data output signal for that time interval result, wherein said means (117) includes logic responsive to a clock having cycles and said means during one clock cycle operates to store the count which was previously incremented in a prior cycle and operates to increment the count to be stored in a subsequent cycle.

2. The processing circuit of claim 1, further comprising latch means (103) having an input connected to the time stamp processor (101) and an output connected to the bin selector means (105) for latching the time interval result output signal.

3. The processing circuit of claim 1, further comprising a free running, loadable counter (121) having a first input and a second input, which receives a signal from a high frequency master clock for generating an output pulse periodically if no signal measurement event occurs, and if a signal measurement event occurs, for being rest with a signal from the counting means at the second port, so that the output pulse is synchronized with the arrival of the time stamp data at the time stamp processor.

4. The processing circuit of one of claims 1 to 3, wherein the time stamp processor means (101) comprises:

time stamp subtracter means (203) for subtracting the two successive time stamps to obtain a raw time interval result; and channel subtracter means (207) for subtracting an offset from the time interval result to correct for channel skew, to obtain a corrected time interval result.

5. The processing circuit of claim 4, wherein the time stamp data comprises more significant binary data bits and less significant binary coded decimal data bits, and the time stamp processor further comprises:

a transform processor for transforming the corrected time interval result to combine the more significant binary bits and the less significant binary coded decimal bits into a single binary bit stream.

6. The processing circuit of any of the preceding claims, further comprising logic means (111) connected to the comparator means (107, 109) for generating a valid data tag to indicate that the time interval result should be added to a histogram bin corresponding to the bin number for that time interval result.

7. The processing circuit of claim 6 wherein the logic means comprises a multiplexer connected to the comparator means for selecting from eight signals, comprising MAXGT (greater than the maximum limit), MAXEQ (equal to the maximum limit), MAXLT (less than the maximum limit), MINGT (greater than the minimum limit), MINLT (less than the minimum limit), INRANGE (between or equal to the minimum and maximum limits), OUTRANGE (greater than the maximum limit or less than the minimum limit), and ISF TRIGGER (interval sampling frequency), and wherein the valid data tag is generated responsive to the INRANGE signal.

8. The processing circuit of any of the preceding claims wherein:

the storing means comprises a clocked dual port RAM 303 having a read address input, a first port for data output, a write address input, and a second port for data input: the reading, incrementing, and writing means comprises: a clocked first latch means (301) having an input connected to the bin selector means and an output connected to the read address input of the dual port RAM (303), a clocked second latch means (309) having an input connected to the output of the first latch means (301) and an output connected to the write address input of the dual port RAM (303), a clocked third latch means (305) having an input connected to the first port of the dual port RAM (303) and an output, and non-clocked incrementer means (307) for incrementing the data stored in the third latch means, having an input connected to the output of the third latch means (305) and an output connected to the second port of the dual port RAM(303);

wherein, on each clock cycle the first latch, the second latch, the third latch, and the second port of the RAM latch the data available at their inputs;

so that on each clock cycle the count for a time interval result to be incremented is read from the RAM (303) into the third latch means from the address on the first latch means, and the incremented count from the previous time interval result is written to the RAM at the address on the second latch means.

9. The processing circuit of claim 8 wherein the third latch (305) has a second input to which the output of the incrementer means (307) is connected and the reading, incrementing, and writing means further comprises:

means for disabling the input from the first port of the dual port RAM to the third latch means and enabling the second input from the incrementer to the third latch means if the bin number stored in the first latch means and the bin number stored in the second latch means are the same, so that the incremented count and not the count from the first port of the RAM is read into the third latch means.

10. The processing circuit of claim 8, further comprising a bin access comparator (311) having a first input connected to the output of the first latch means (301), a second input connected to the output of the second latch means (309), and an output connected to a second input of the third latch means (305), for detecting access conflicts to the dual port RAM (303) and generating a relatch signal so that the incremented count from the incrementer means (307) is latched back into the third latch means (305) instead of the count to be incremented being read from the RAM (303).

**Patentansprüche**

1. Pipeline-zeitintervall-Datenverarbeitungsschaltung zum Umwandeln von Zeitstempeldaten, welche von Signalmeßereignissen stammen, in Zeitintervallergebnisse und zum Verarbeiten der Ergebnisse zu einem Hardware-Gesamthistogramm, mit

einer Zählvorrichtung (100) zum Messen der Zeitstempeldaten für ein elektrisches Signal, welches mehreren Signalmeßereignissen entspricht, wobei die Zeitstempeldaten die Zeiten markieren, bei denen die Ereignisse aufgetreten sind;

einer Zeitstempelverarbeitungsvorrichtung (100) zum Empfangen der Zeitstempeldaten, Subtrahieren von zwei aufeinanderfolgenden Zeitstempeln, um ein Zeitintervallergebnis zu erzeugen, welches dem Zeitintervall zwischen den aufeinanderfolgenden Ereignissen entspricht, und um ein Zeitintervallergebnis-Ausgangssignal vorzusehen;

einer Vergleichervorrichtung (107, 109), welche auf das Zeitintervallergebnis-Ausgangssignal von der Zeitstempelverarbeitungsvorrichtung (101) anspricht, um das Zeitintervallergebnis mit minimalen und maximalen Grenzen zu vergleichen, um zu ermitteln, ob das Zeitintervallergebnis gültige Histogrammdaten liefert, und um ein "gültige Daten"-Ausgangssignal vorzusehen, wenn das Zeitintervallergebnis gültige Histogrammdaten liefert;

eine Intervallbereichsauswahlvorrichtung (105), welche auf das Zeitintervallergebnis-Ausgangssignal von der Zeitstempelverarbeitungsvorrichtung anspricht, um zu ermitteln und zu identifizieren, in welchen Histogrammintervallbereich das Zeitintervallergebnis gehört, und um ein Intervallbereichsnummern-Ausgangssignal vorzusehen; und

einer Vorrichtung (117) zum Speichern von Zählwerten, wobei jeder Zählwert der Häufigkeit entspricht, mit der dieses Zeitintervallergebnis mit seinem Histogrammintervallbereich identifiziert wird, wobei die Vorrichtung (117) auf das Intervallbereichsnummern-Ausgangssignal und das gültige Daten-Ausgangssignal anspricht, um die Zahlwerte für die Histogrammintervallbereiche zu speichern und um den Zählwert des Histogrammintervallbereichs zu inkrementieren, welcher dem Intervallbereichsnummern-Ausgangssignal für ein Zeitintervallergebnis entspricht, wenn die Vergleichervorrichtung das gültige Daten-Ausgangssignal für dieses Zeitintervallergebnis vorsieht, wobei die Vorrichtung (117) ferner eine Logik aufweist, die auf einen zyklischen Takt anspricht, und wobei die Vorrichtung während eines Taktzyklusses den Zählwert speichert, der vorher in einem vorhergehenden Zyklus inkrementiert wurde, und den Zählwert, der in einem nachfolgenden Zyklus gespeichert werden soll, inkrementiert.

2. Verarbeitungsschaltung nach Anspruch 1, mit ferner einem Zwischenspeicher (103), der einen mit der Zeitstempelverarbeitungsvorrichtung (101) verbundenen Eingang und einen mit der Intervallbereichsauswahlvorrichtung (105) verbundenen Ausgang aufweist, um das Zeitintervallergebnis-Ausgangssignal zwischenzuspeichern.

3. Verarbeitungsschaltung nach Anspruch 1, mit ferner einem selbstschwingenden, ladbaren Zähler (121) mit einem ersten Eingang und einem zweiten Eingang, der ein Signal von einem Hochfrequenz-Mastertakt empfängt, um periodisch einen Ausgangsimpuls zu erzeugen, wenn kein Meßsignalereignis auftritt, und der, wenn ein Meßsignalereignis auftritt, mit einem Signal von der Zählvorrichtung bei dem zweiten Anschluß zurückgesetzt wird, so daß der Ausgangsimpuls mit der Ankunft der Zeitstempeldaten bei der Zeitstempelverarbeitungsvorrichtung synchronisiert ist.

4. Verarbeitungsschaltung nach einem der Ansprüche 1-3, bei der die Zeitstempelverarbeitungsvorrichtung (101) folgende Merkmale aufweist: eine Zeitstempelsubtrahiervorrichtung (203) zum Subtrahieren der zwei aufeinanderfolgenden Zeitstempel, um ein grobes Zeitintervallergebnis zu erhalten; und eine Kanalsubtrahiervorrichtung (207) zum Subtrahieren eines Offsets von dem Zeitintervallergebnis, um einen zeitlichen Versatz der Kanäle auszugleichen, um ein korrigiertes Zeitintervallergebnis zu erhalten.

5. Verarbeitungsschaltung nach Anspruch 4, bei der die Zeitstempeldaten höherwertige binäre Datenbits und niederwertige binär codierte dezimale Datenbits aufweisen, und die Zeitstempelverarbeitungsvorrichtung folgendes Merkmal aufweist: einen Transformationsprozessor zum Transformieren des korrigierten Zeitintervallergebnisses, um die höherwertigen binären Bits mit den niederwertigen binär codierten dezimalen Bits in einem einzigen binären Bitstrom zu kombinieren.

6. Verabeitungsschaltung nach einem der vorangehenden Ansprüche, mit weiterhin einer Logikvorrichtung (111), die mit der Vergleichervorrichtung (107, 109) verbunden ist, um eine gültige Daten-Marke zu erzeugen, um anzuzeigen, daß das Zeitintervallergebnis zu einem Histogrammintervallbereich addiert werden sollte, welcher der Intervallbereichsnummer für dieses Zeitintervallergebnis entspricht.

7. Verarbeitungsschaltung nach Anspruch 6, bei der die Logikvorrichtung einen Multiplexer aufweist, der mit der Vergleichervorrichtung verbunden ist, um aus acht Signalen auszuwählen, welche MAXGT (größer als die maximale Grenze), MAXEQ (gleich der maximalen Grenze), MAXLT (kleiner als die maximale Grenze), MINGT (größer als die minimale Grenze), MINLT (kleiner als die minimale Grenze), INRANGE (zwischen oder gleich der minimalen und der maximalen Grenze), OUTRANGE (größer als die maximale Grenze oder kleiner als die minimale Grenze) und ISF TRIGGER (Intervallabtastfrequenz) umfassen, und bei der die gültige Daten-Marke abhängig von dem INRANGE-Signal erzeugt wird.

8. Verarbeitungsschaltung nach einem der vorangehenden Ansprüche, bei der

die Speichervorrichtung ein getaktetes Zweikanal-RAM (303) aufweist, das einen Leseadresseneingang, einen ersten Kanal für die Datenausgabe, einen Schreibadresseneingang und einen zweiten Kanal für die Dateneingabe hat; und bei der die Lese-, Inkrement- und Schreibvorrichtung folgende Merkmale aufweist:

- eine getaktete erste Latchvorrichtung (301) mit einem Eingang, der mit der Intervallbereichsauswahlvorrichtung verbunden ist, und einem Ausgang, der mit dem Leseadresseneingang des Zweikanal-RAMs (303) verbunden ist,
- eine getaktete zweite Latchvorrichtung (309) mit einem Eingang, der mit dem Ausgang der ersten Latchvorrichtung (301) verbunden ist, und einem Ausgang, der mit dem Schreibadresseneingang des Zweikanal-RAMs (303) verbunden ist,
- eine getaktete dritte Latchvorrichtung (305) mit einem Eingang, der mit dem ersten Kanal des Zweikanal-RAMs (303) verbunden ist, und mit einem Ausgang, und
- eine nicht getaktete Inkrementiervorrichtung (307) zum Inkrementieren der in der dritten Latchvorrichtung gespeicherten Daten, die einen mit dem Ausgang der dritten Latchvorrichtung (305) verbundenen Eingang und einen mit dem zweiten Kanal des Zweikanal-RAMs (303) verbundenen Ausgang aufweist;
- wobei bei jedem Taktzyklus das erste Latch, das zweite Latch und das dritte Latch und der zweite Kanal des RAMs die an ihren Eingängen anliegenden Daten zwischenspeichern;

so daß bei jedem Taktzyklus der Zählwert für ein zu inkrementierendes Zeitintervallergebnis aus dem RAM (303) bei der in der ersten Latchvorrichtung gespeicherten Adresse in die dritte Latchvorrichtung ausgelesen wird, und der inkrementierte Zählwert aus dem vorhergehenden Zeitintervallergebnis bei der in der zweiten Latchvorrichtung gespeicherten Adresse in das RAM geschrieben wird.

9. Verarbeitungsschaltung nach Anspruch 8, bei der das dritte Latch (305) einen zweiten Eingang aufweist, mit dem der Ausgang der Inkrementiervorrichtung (307) verbunden ist, und bei der die Lese-, Inkrementier- und Schreibvorrichtung ferner folgendes Merkmal aufweist:

eine Einrichtung zum Sperren der Signalübergabe von dem ersten Kanal des Zweikanal-RAMs zu dem Eingang der dritten Latchvorrichtung und zum Freigeben der Signalübergabe von der Inkrementiervorrichtung zu dem Eingang der dritten Latchvorrichtung, wenn die in der ersten Latchvorrichtung gespeicherte Intervallbereichsnummer und die in der zweiten Latchvorrichtung gespeicherte Intervallbereichsnummer gleich sind, so daß der inkrementierte Zählwert und nicht der Zählwert von dem ersten Kanal des RAM in die dritte Latchvorrichtung eingelesen wird.

10. Verarbeitungsschaltung nach Anspruch 8, mit ferner einem Intervallbereichszugriffvergleicher (311), der einen ersten, mit dem Ausgang der ersten Latchvorrichtung (301) verbundenen Eingang, einen zweiten, mit dem Ausgang der zweiten Latchvorrichtung (309) verbundenen Eingang und einen mit einem zweiten Eingang der dritten Latchvorrichtung (305) verbundenen Ausgang aufweist, um Konflikte bei dem Zugriff auf das Zweikanal-RAM (303) zu erfassen und ein Relatch-Signal zu erzeugen, so daß der inkrementierte Zählwert von der Inkrementiervorrichtung (307), anstelle des aus dem RAM (303) gelesenen, zu inkrementierenden Zählwertes in die dritte Latchvorrichtung (305) zurückgespeichert wird.

## Revendications

1. Circuit de traitement de données d'intervalles de temps en mode pipeline pour la conversion de données de marques temporelles, fournies par des événements de mesure de signaux, en des résultats d'intervalles de temps et pour le traitement des résultats en un histogramme cumulé par un système matériel, caractérisé en ce qu'il comporte :

des moyens de comptage (100) pour mesurer les données de marques temporelles pour un signal électrique, correspondant à une pluralité d'événements de mesure de signaux, les données de marques temporelles marquant les instants auxquels les événements sont apparus;
des moyens formant processeur (101) de traitement des marques temporelles pour recevoir les données de marques temporelles, soustraire deux marques temporelles successives pour obtenir un résultat d'intervalle de temps représentant l'intervalle de temps entre les événements successifs et délivrer un signal de sortie d'intervalle de temps;
des moyens comparateurs (107,109) aptes à répondre au signal de sortie du résultat d'intervalle de temps délivré par les moyens formant processeur (101) de traitement de marques temporelles, pour comparer le résultat d'intervalle de temps à des limites minimale et maximale pour déterminer si le résultat d'intervalle de temps est une donnée d'histogramme valable et délivrer un signal de sortie de données valable lorsque le résultat d'intervalle de temps est une donnée d'histogramme valable;
des moyens (105) de sélection de sections, aptes à répondre au signal de sortie de résultat d'intervalle de temps délivré par les moyens formant processeur de traitement des marques temporelles pour déterminer et identifier à quelle section de l'histogramme appartient le résultat d'intervalle de temps et délivrer un signal de sortie de numéro de section; et
des moyens (117) pour mémoriser des valeurs de comptage, chaque valeur de comptage représentant le nombre d'apparitions, lors desquelles ledit résultat d'intervalle de temps est identifié avec sa section d'histogramme;
lesdits moyens (117) étant aptes à répondre au signal de sortie du numéro de section au signal de sortie de donnée valable, pour mémoriser des valeurs de comptage pour les sections de l'histogramme, pour incrémenter la valeur de comptage de la section de l'histogramme correspondant au signal de sortie de numéro de section pour un résultat d'intervalle de temps, si les moyens comparateurs délivrent le signal de sortie de donnée valable pour ce résultat d'intervalle de temps, lesdits moyens (117) comprenant une logique apte à répondre à un signal d'horloge comportant des cycles, et lesdits moyens fonctionnant pendant un cycle d'horloge pour mémoriser la valeur de comptage qui a été incrémentée précédemment lors d'un cycle antérieur et agissant de manière à incrémenter la valeur de comptage devant être mémorisée lors d'un cycle ultérieur.

2. Circuit de traitement selon la revendication 1, comprenant en outre des moyens de verrouillage (103) possédant une entrée raccordée au processeur (101) de traitement des marques temporelles et une sortie raccordée au moyens (105) de sélection des sections pour verrouiller le signal de sortie de résultat de l'intervalle de temps.

3. Circuit de traitement selon la revendication 1, comprenant en outre un compteur à fonctionnement libre (121), pouvant être chargé, comprenant une première entrée et une seconde entrée et qui reçoit un signal provenant de l'horloge maître à haute fréquence pour produire une impulsion de sortie périodiquement si aucun événement de mesure de signal n'apparaît, et, si un événement de mesure de signal apparaît, pour être ramené à zéro avec un signal délivré par les moyens de comptage au niveau du second port de sorte que l'impulsion de sortie est synchronisée avec l'arrivée de la donnée de marque temporelle dans le processeur de traitement de marques temporelles.

4. Circuit de traitement selon l'une des revendications 1 à 3, dans lequel les moyens formant processeur (101) de traitement de marques temporelles comprend :

des moyens (203) formant soustracteur de marques temporelles pour soustraire les deux marques temporelles successives de manière à obtenir un résultat d'intervalle de temps brut; et

des moyens (207) formant soustracteur de canaux pour soustraire un décalage par rapport au résultat d'intervalle de temps de manière à corriger le biais de canal pour obtenir un résultat d'intervalle de temps corrigé.

5. Circuit de traitement selon la revendication 4, dans lequel les données de marques temporelles comprennent des bits de données binaires plus importants et des bits de données décimales codées en binaire moins importantes, et le processeur de traitement de marques temporelles comporte en outre :

un processeur de transformation pour transformer le résultat d'intervalle de temps corrigé pour combiner les bits binaires plus importants et les bits décimaux codés en binaire, moins importants en un seul flux binaire de bits.

6. Circuit de traitement selon l'une quelconque des revendications précédentes, comprenant en outre des moyens logiques (111) connectés aux moyens comparateurs (107,109) pour produire une étiquette de donnée valable pour indiquer que le résultat de l'intervalle de temps doit être additionné à une section de l'histogramme, qui correspond au numéro de section pour ce résultat d'intervalle de temps.

7. Circuit de traitement selon la revendication 6. dans lequel les moyens logiques comprennent un multiplexeur connecté aux moyens comparateurs pour réaliser une sélection parmi huit signaux, comprenant MAXGT (supérieur à la limite maximale), MAXEQ (égal à la limite maximale), MAXLT (inférieur à la limite maximale), MINGT (supérieur à la limite minimale), MINLT (inférieur à la limite minimale) INRANGE (entre ou égale aux limites minimale et maximale) OUTRANGE (supérieur à la limite maximale ou inférieur à la limite minimale) et ISF TRIGGER (fréquence d'échantillonnage d'intervalles) et dans lequel l'étiquette de donnée valable est produite en réponse au signal INRANGE.

8. Circuit de traitement selon l'une quelconque des revendications précédentes, dans lequel :

les moyens de mémoire comprennent une mémoire RAM à deux ports (303), commandée de façon cadencée et possédant une entrée d'adresse de lecture, un premier port pour la sortie de données, une entrée d'adresse d'écriture et un second port pour l'entrée de données;

les moyens de lecture, d'incrémentation et d'écriture comprennent :

des premiers moyens de verrouillage (301) commandés de façon cadencée et possédant une entrée connectée aux moyens de sélection de sections et une sortie connectée à l'entrée d'adresse de lecture de la mémoire RAM à deux ports (303),

des seconds moyens de verrouillage (309) commandés de façon cadencée et possédant une entrée connectée à la sortie des premiers moyens de verrouillage (301) et une sortie connectée à l'entrée d'adresse d'écriture de la mémoire RAM à deux ports (303),

des troisièmes moyens de verrouillage (305) commandés de façon cadencée et possédant une entrée connectée au premier port de la mémoire RAM à deux ports (303) et une sortie, et

des moyens d'incrémentation (307) non commandés de façon cadencée et servant à incrémenter les données mémorisées dans les troisièmes moyens de verrouillage, comportant une entrée connectée à la sortie des troisièmes moyens de verrouillage (305) et une sortie connectée au second port de la mémoire RAM à deux ports (303);

et dans lequel, lors de chaque cycle d'horloge, les premiers moyens de verrouillage, les second moyens de verrouillage, les troisième moyens de verrouillage et le second port de la mémoire RAM verrouillent les données disponibles à leurs entrées,

de sorte que, lors de chaque cycle d'horloge, la valeur de comptage pour un résultat d'intervalle de temps devant être incrémenté est lue dans la mémoire RAM (303) pour être introduite dans les troisièmes moyens de verrouillage à partir de l'adresse dans les premiers moyens de verrouillage, à la valeur de comptage incrémentée provenant du résultat d'intervalle de temps précédent et décrite dans la mémoire RAM à l'adresse des seconds moyens de verrouillage.

9. Circuit de traitement selon la revendication 8, dans lequel les troisième moyens de verrouillage (305) possèdent une seconde entrée à laquelle est connectée la sortie des moyens d'incrémentation (307) et les moyens de lecture, d'incrémentation et d'écriture comprennent en outre :

des moyens pour invalider le signal d'entrée provenant du premier port de la mémoire RAM à deux ports et envoyer aux troisièmes moyens de verrouillage et autoriser le second signal d'entrée provenant du dispositif d'incrémentation et envoyer aux troisièmes moyens de verrouillage si le numéro de section mémorisé dans les troisièmes moyens de verrouillage est le numéro de section mémorisé dans les seconds moyens de verrouillage sont identiques, de sorte que la valeur de comptage incrémentée et non la valeur de comptage délivrée par le premier port de la mémoire RAM est introduit dans les troisièmes moyens de verrouillage.

10. Circuit de traitement selon la revendication 8, comprenant en outre un comparateur (311) d'accès aux sections, comprenant une première entrée connectée à la sortie des premiers moyens de verrouillage (301) une seconde entrée connectée à la sortie des seconds moyens de verrouillage (309), et une sortie connectée à une seconde entrée des troisièmes moyens de verrouillage (305) pour détecter des conflits d'accès à la mémoire RAM à deux ports (303) et produire un signal de reverrouillage de sorte que la valeur de comptage incrémentée délivrée par les moyens d'incrémentation (302) sont verrouillés en retour dans les troisièmes moyens de verrouillage (305) à la place de la valeur de comptage devant être incrémentée, qui est lue dans la mémoire RAM (303).

TIME
STAMP
DATA

101

TIME
STAMP
PROCESSOR

CLK

103

LATCH

CLK

105

BIN
SELECTOR

113

LATCH

CLK

117

RAM
STORAGE

CLK

COUNTING
HARDWARE

100

CL

COUNTER → CLK

LOAD

121

MAX

MAX
COMPARATOR

107

MIN

MIN
COMPARATOR

109

111

TRIGGER
LOGIC

115

LATCH

CLK

119

MUX → OUT

CLK

**FIG 1**

FIG 2

**FIG 3**